# EUROPEAN PATENT APPLICATION

(11) **EP 2 999 077 A1**
(43) Date of publication of application: **23.03.2016**
(21) Application number: 14196138.3
(22) Date of filing: 03.12.2014
(51) Int. Cl.: H02J 3/32, H02J 3/38, H02J 3/00, H02J 9/00

(54) **An energy management device and an electrical installation**

(30) Priority: 17.09.2014 GB 201416414
(71) Applicant: Clean Power Solutions Ltd, Scarisbrick, Lancashire L40 8HH (GB)
(72) Inventor: Hough, Michael, Scarisbrick, L40 8HH (GB); Stanton, Marc, Scarisbrick, L40 8HH (GB)
(74) Representative: Hutchinson, Thomas Owen

(57) **Abstract**

The invention relates to an energy management device for use in an electrical installation having an energy store (48), a connection to a mains electrical grid (14), and a generator (10,12) providing an electrical output which is coupled to a generator inverter (22,24) which converts the generator's electrical output to AC for driving a load (56,58). The energy management device comprises at least one bi-directional inverter (26) which has an AC side (28) and a DC side (30). The AC side of the bi-directional inverter is connectable to the generator inverter and to the load. The bi-directional inverter is controllable by means of a signal taken from the mains electrical grid to provide on its AC side an AC voltage which varies in sympathy with that of the mains electrical grid. The DC side of the bi-directional inverter is connectable to the energy store to supply electrical energy to it. The bi-directional inverter is able to pass electrical power both (a) in the direction from the AC side to the DC side, to charge the energy store and (b) in the direction from the DC side to the AC side, to supply energy from the energy store to the load.

## Description

The present invention relates to an energy management device for use in an electrical installation having a generator and an energy store, and also to an electrical installation as such.

So-called distributed energy generation is becoming increasingly widely used. A small capacity electricity generator is installed close to the point of power usage and is connected in parallel both to local loads and to the mains electric power grid. The generator's supply can be used to drive the local loads, but typically due to the erratic nature of renewable energy production that supply will not consistently match the demand of the local loads. At times when the power output of the generator exceeds the local power usage, power can flow from the generator to the grid. When power usage exceeds the output of the generator, power is drawn from the grid.

There is a range of different small scale devices that can be used for distributed generation. They include generators that exploit renewable energy sources, such as photovoltaic cells and wind turbines, and generators that rely on a supplied fuel, such as micro-turbines, combined heat and power units, fuel cells and those driven by internal combustion engines.

Some of these technologies such as photovoltaics lend themselves well to domestic installations. It is for example common in some countries to see a bank of photovoltaic cells on the roof of a domestic dwelling. The power output from wind and solar powered generators varies of course with environmental factors such as sunshine and wind strength.

Small distributed energy generators connect to the public low voltage distribution part of the electric grid, not to the high voltage transmission system, but in order to do so they must provide an output in the required form. The output must be AC (alternating current), which may be single phase or three phase according to the connection the user has to the grid; it must be in phase with the grid; and it must be at the appropriate voltage. It is also necessary to control power factor by controlling the phase difference between current and voltage.

The direct output of the local generator is typically not in the required form so the coupling to the grid is made through an inverter which receives the renewable energy generator's output and provides as its own output an AC supply suitable for connection to the grid. The generator's output is typically DC so the inverter acts as a DC to AC converter. The inverter monitors the grid and adjusts the phase and voltage of its supply to correspond to those of the grid. Suitable devices are well known and widely available and are sometimes referred to as "grid-tied inverters".

To ensure that distributed generators do not adversely affect the grid, regulations govern various aspects of the equipment and its operation including (a) the inverter through which the generator is coupled to the grid and (b) the maximum power delivered to the grid. In the United Kingdom, for example, one industry standard (known as G83) applies to generators supplying up to 16 amps per phase and another, more onerous, standard (known as G59) applies to generators supplying over 16 amps per phase. Given the voltages involved, this implies that to qualify for the G83 standard a generator must not supply more than 3.68 kW per phase. Hence in many small installations, such as domestic installations, the inverter is limited by the manufacturer to meet this standard, or an "intermediate feed-in device" incorporating an inverter is used which limits the power transmitted to the grid. If the locally generated power available for export to the grid exceeds the limit then energy may be wasted. Many domestic generators using renewable energy sources are capable of providing power in excess of the 3.68 kW limit in appropriate environmental conditions.

It is also necessary, for safety and for compliance with regulations, for the intermediate feed-in device or inverter to disconnect the generator from the grid when grid power supply is cut off. Electricity distribution companies need to be able to ensure that if they cut off a given part of the distribution network for engineering work, that part will not subsequently be maintained at a high voltage that might cause danger to workers. Thus feed-in devices cease power delivery when no grid connection is detected.

In order to reduce wastage of generated energy it is desirable to incorporate an energy store into the local installation. Batteries are well suited to use in small installations although other energy storage technologies are known and may be employed. The principle is straightforward: generated energy that cannot immediately be delivered to the grid due to the power limit is stored. At a later time when the power available for immediate delivery from the generator to the grid is below the limit (either because the generator's output is lower because of environmental conditions - lack of sunlight or wind, for example, or because the user's power consumption on-site is higher) the stored energy is released to the grid.

Implementing such a system using available technology and within the regulations is less straightforward. In addition to the intermediate feed-in device or inverter through which the coupling is made to the grid, such a system needs an inverter associated with the renewable generation system (e.g. wind turbine, solar PV etc.) to enable the generator to drive on-site loads. Known inverters used in this connection are designed for direct grid connection and do not deliver power without such a connection, so they are not able directly to supply power to the energy store. If the generator's inverter does not "see" the grid, no power is delivered.

Various aspects of the invention are set forth in the appendent claims.

According to an aspect of the invention, there is provided an energy management device for use in an electrical installation having an energy store, a connection to a mains electrical grid, and a generator providing an electrical output which is coupled to the generator inverter which converts the generator's electrical output to AC for driving a load, the energy management device comprising at least one bi-directional inverter which has an AC side and a DC side, the AC side of the bi-directional inverter being connectable to the generator inverter and to the load and the bi-directional inverter being controllable by means of a signal taken from the mains electrical grid to provide on its AC side an AC voltage which varies in sympathy with that of the mains electrical grid, and the DC side of the bi-directional inverter being connectable to the energy store to supply electrical energy to it, wherein the bi-directional inverter is able to pass electrical power both (a) in the direction from the AC side to the DC side, to charge the energy store and (b) in the direction from the DC side to the AC side, to supply energy from the energy store to the load.

The generator inverter is suitably a renewable energy source's inverter.

The invention thus provides a synthetic grid at the AC side of the bi-directional inverter or inverters, to which synthetic grid, the generator inverter can be connected. Without the provision of a synthetic grid, the generator inverter would not function for the reasons described above. However, by providing a synthetic grid at the connection between the generator inverter and the rest of the system, it is possible to connect the DC side (or sides) of the bi-directional inverter (or inverters) to a DC power storage device (e.g. a battery bank) or, via a feed-in inverter, to the grid. In other words, the invention enables a generator inverter to be successfully connected to something other than the grid, which other thing can be configured to feed power into a power storage device or the grid, as required. Further, the provision of a bi-directional inverter permits power to flow in either direction, thus enabling the power storage to provide an output at the AC side of the bi-directional inverter, which the generator inverter "sees" as the grid. Suitably, such a configuration addresses or overcomes some of the problems outlined above and/or provides an alternative means for connecting renewable energy sources to a power distribution grid.

Suitably, the bi-directional inverter passes power from its AC side to its DC side or vice versa as necessary to maintain the AC voltage on its AC side at the same level as the AC voltage of the mains electrical grid. A Traditional charger/inverter accepts a connection in AC form from renewables as a diversion of power transmitted to the grid. It will therefore charge batteries to a set point state of charge in preference to exporting to the grid. The connection between the renewables inverter(s) AC output and the batteries and the grid therefore is as one. Because of the direct connection therefore, between the AC output from the renewable(s) inverter(s) to the grid the system is not G83 compliant. The bi-directional inverter design described in this document has an isolated connection to the grid via a G83 inverter and a separate and isolated connection to the renewable(s) inverter(s) AC output via a synthetic grid created from the DC bus, thus complying with G83 by supplying a separate isolated DC supply to a G83 certificated inverter for grid export. Additionally, traditional battery storage systems used with renewable installations are designed around 48v DC or below. The design described in this document runs a DC voltage between 220 and 440v, this higher voltage allows the DC output to drive the separate G83 inverter, which requires a higher input than 48v.

Suitably, a battery charge controller is connected between the bi-directional inverter and an output of the energy management device for connection to an energy store in the form of one or more electrical batteries.

Suitably, a port is provided for connection of the DC side of the bi-directional inverter to an input of a G83 type tested inverter, or an intermediate feed-in device, for exporting energy to the mains electrical grid.

Suitably, the battery charge controller is configured to inhibit battery discharge below a pre-set state of charge when energy is being exported to the mains electrical grid.

Suitably, the energy management device can be used in a polyphase electrical installation and may comprise a plurality of bi-directional inverters: one for each of the respective phases of the polyphase electrical installation.

Suitably, the energy management device can be used in a three phase electrical installation and may comprise three bi-directional inverters: one for each of the respective phases of the three phase electrical installation.

An aspect of the invention provides an electrical installation comprising an energy store, a connection to a mains electrical grid, a generator, a generator inverter connected to the generator to convert the generator's electrical output to AC for driving a load, at least one bi-directional inverter which has an AC side and a DC side, the AC side of the bi-directional inverter being connected to the generator inverter and to the load and the bi-directional inverter being controllable by means of a signal taken from the mains electrical grid to provide on its AC side an AC voltage which varies in sympathy with that of the mains electrical grid, and the DC side of the bi-directional inverter being connected to the energy store to supply electrical energy to it, wherein the bi-directional inverter is able to pass electrical power both (a) in the direction from the AC side to the DC side, to charge the energy store and (b) in the direction from the DC side to the AC side, to supply energy from the energy store to the load.

Suitably, the electrical installation further comprises an intermediate feed-in device, such as a G83 type tested inverter, connectable between the DC side of the bi-directional inverter and the mains electrical grid, to export power from the electrical installation to the grid.

The intermediate feed-in device (e.g. the G83 type tested inverter) suitably limits the power that can be exported from the electrical installation to the grid.

Suitably, battery discharge is inhibited or limited to a pre-set state of charge during export of power from the electrical installation to the grid.

Suitably, the electricity generator is powered by a renewable source of energy.

A switching device is suitably provided, which is switchable between a first configuration in which it connects the load to the AC side of the bi-directional inverter and a second configuration in which it connects the load to the mains electrical grid. This can be a manual or automatic transfer switch, depending on site requirements. Suitably, the switching device comprises a soft transfer switch, which gradually fades the connection from the load to the AC side of the bi-directional inverter to the load to the mains electrical grid.

The energy store may comprise a battery and/or a bank of electrical cells. Where this is the case, the installation may further comprise a battery charge controller connected between the DC side of the bi-directional inverter and the energy store, the battery charge controller being configured to charge the batteries when voltage on the DC side of the bi-directional inverter is below a threshold and to discharge the batteries when voltage on the DC side of the bi-directional inverter is above a threshold. Suitably, export of power to the grid depends on the voltage of the DC bus of side of the bi-directional inverter: when the DC bus voltage is above a threshold value, power can be exported to the to grid, e.g. via a G83 inverter; but not otherwise.

Specific embodiments of the present invention will now be described, by way of example only, with reference to the accompanying drawings, in which:
Figure 1 is a block diagram of an electrical installation embodying the present invention which is able to exchange energy with the electric grid and is provided with an energy store;
Figure 2 is a more detailed block diagram of an installation also embodying the present invention; and
Figure 3 is a variant of the system of Figure 1, further comprising a soft changeover switch.

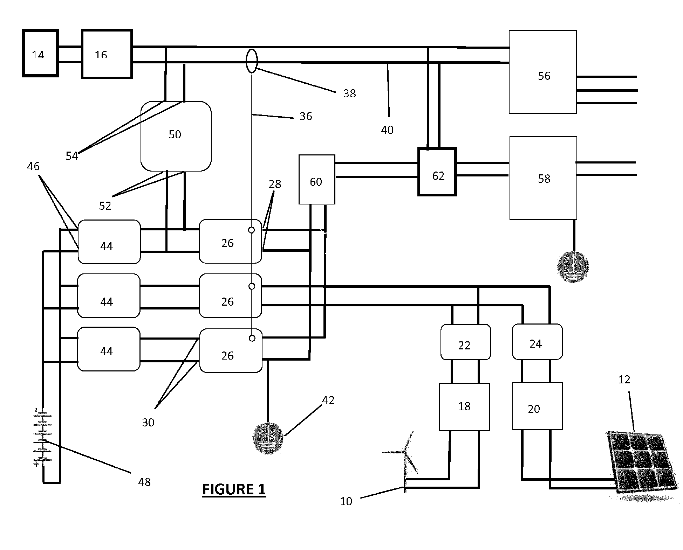

Figure 1 represents a single phase AC installation. The installation receives electrical energy from at least one renewable energy or small scale local generator. In this example two such generators - a wind turbine 10 and a bank of photovoltaic cells 12 - are provided, although other installations could use one more generators. The installation is also connected to a mains electric power grid, represented by box 14, through an import meter 16 which is installed by an electricity company and whose reading is used as a basis for calculating the user's bill.

Each of the generators 10, 12 is connected to a respective generator inverter 18, 20. These are grid-tied inverters designed to be directly connected to an AC electric grid and to match the frequency, phase and voltage of their outputs to the grid. However in the present installation they are not connected to the power grid 14.

The outputs of the generator inverters 18, 20 are monitored by respective generation meters 22, 24, beyond which they are connected together so that the outputs of the two generator inverters 18, 20 are in parallel. The combined output is led to a bank of bi-directional inverters 26. In the illustrated embodiment three bi-directional inverters 26 are employed.

Whereas power flow through a conventional inverter is typically in the direction from a DC input to an AC output, the bi-directional inverters 26 are, as their name suggests, able to transmit power in either direction. However the bi-directional inverters 26 function conventionally in that a DC voltage on one side is converted to a different AC voltage on the other side. The two ports 28 of each bi-directional inverter 26 which experience AC will be referred to as the "AC side" and the two ports 30 of each bi-directional inverter 26 which experience DC will be referred to as the "DC side". Whilst bi-directional inverters generally are well known to the skilled person, bi-directional inverters suitable for use in the illustrated installations have been specially adapted: typically have a high voltage DC side (100V DC - 450V DC, typically); and also having been adapted such that their AC sides are synchronised with the grid, as shall be described below.

The bi-directional inverters 26 are connected to one another in parallel on their AC sides. Each bi-directional inverter 26 in this example has a power capacity of 5kW, so that the bank of three such devices provides a power capacity of 15kW. Other embodiments could employ a single unit with the required power capacity, or could employ a different number of units in a bank to achieve a design power capacity.

The bi-directional inverters 26 are controlled in such a way as to provide across the ports 28 on their AC side a system voltage which follows the AC voltage from the grid in terms of its frequency, phase and amplitude. To achieve this the bi-directional inverters 26 sense the AC waveform of the grid through a pilot line 36 coupled at 38 to a grid-connected live power line 40. The coupling 38 does not necessarily require a direct connection to the power line 40 - it may instead use an inductor, as depicted.

The effect of the bi-directional inverters 26 is to create on their AC side a "synthetic grid" connected to the generator inverters 18, 20. This synthetic grid emulates the mains power grid 14. The generator inverters 18, 20 are thus able to supply the synthetic grid with power, despite not being connected to the actual power grid 14.

An earth rod 42 is tapped from neutral to create a TT (Terra-Terra) earthing system for the synthetic grid.

Each of the bi-directional inverters 26 is connected through its DC ports 30 to a respective battery charge controller 44. Charging outputs 46 of each battery charge controller 44 are connected to opposite poles of a bank of batteries 48 forming the energy store in this embodiment. The battery charge controllers supply a suitable DC output to charge the batteries 48 when power flow is in that direction, and also provide the route through which the batteries are discharged when power flow is in the opposite direction.

When power output from the generators 10, 12 is low, power for driving local loads can be drawn from the batteries 48 via the battery charge controllers 44 and the bi-directional inverters 26. If the power output from the generators 10, 12 rises (or if demand from the loads falls) so that there is an excess of generated energy, a rise in the system voltage on the synthetic grid is prevented by the bi-directional inverters 26 which then serve to sink power to the batteries.

The installation is able to export energy to the grid through an intermediate feed-in device 50, which in this embodiment complies with the UK's G83 standard, its output power being limited to 3.68kW. DC inputs 52 of the intermediate feed-in device 50 are connected across DC ports 30 of one of the bi-directional inverters 26 and its AC outputs 54 are connected to the grid-connected power lines 40.

Power is exported to the grid when the voltage on the DC bus (i.e. at the feed-in device terminals 52) exceeds a threshold value, i.e. when the feed-in device "sees" a sufficiently high voltage, but not otherwise. Thus, power exporting to the grid is largely and/or entirely dependent on the DC bus voltage on the DC side of the bi-directional inverters 26.

The illustrated installation has a first distribution board 56 through which, in this embodiment, power is directed to household loads such as ring mains and lighting, and a second distribution board 58 for renewable loads. The first distribution board 56 is constantly connected to the mains power grid 14. The second distribution board 58 is normally connected to the synthetic grid via a switch fuse 60 and a change-over switch 62 formed in this embodiment as a manual switch. When necessary a user can change the state of the change-over switch 62, causing it to connect the second distribution board to the mains power grid 14 and to disconnect it from the synthetic power grid.

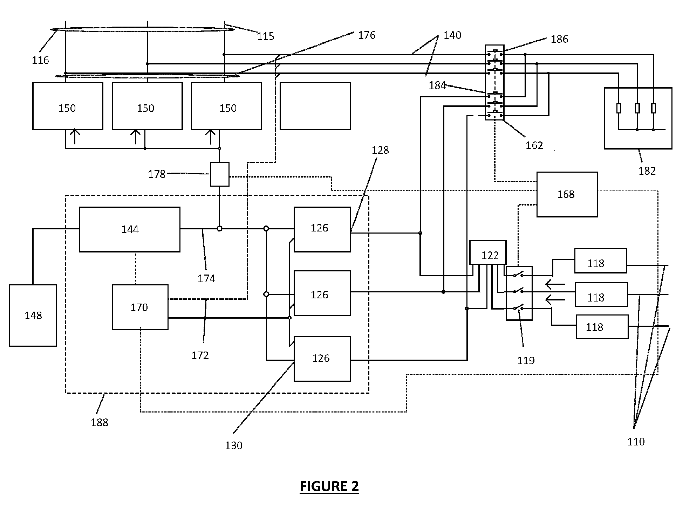

The installation illustrated in Figure 2 is three-phase, but is in many other respects similar to the Figure 1 embodiment.

The Figure 2 installation receives three phase power from one or more local generators (not illustrated) through lines 110 each connected to a respective generator inverter 118 (and in practice the three inverters 118 handling the three phases may be integrated in a single unit). As in the Figure 1 embodiment, the generator inverters 118 are grid-tied inverters which are designed to be connected to an AC electric grid but are instead connected, in the illustrated embodiment, to a synthetic grid as will be explained below.

The installation also has connections to a mains electric power grid through power lines 115 via an electricity supplier's meter 116.

The outputs of the generator inverters 118 are led via respective over voltage protection contactors 119 and a generation meter 122 to respective bi-directional inverters 126. The over voltage protection contactors open if the voltage from the local generators becomes too high. They are controlled by an electronic controller 168 which in this embodiment has various control functions and is a programmable digital device. The generation meter 122 serves to record the energy supplied by the local generator.

In this embodiment each of the three bi-directional inverters 126 handles one phase of the three phase AC supplied by the generator. Each has an AC port 128 and a DC port 130, and power flow between the two can take place in either direction. The DC ports 130 of all three bi-directional inverters 126 are connected to one another and to a battery charge controller 144 whose output is led to a bank of batteries (electrical cells) 148.

The bi-directional inverters 126 are in this embodiment provided with an inverter control unit 170 which receives through a pilot line 172 signals representing phase and amplitude in three grid-connected power lines 140 (one line per phase of the three phase mains grid supply) and in response controls the three bi-directional inverters 126 to follow the grid voltage. As in the Figure 1 embodiment, the effect is to provide, on the AC side of the bi-directional inverters 126, a "synthetic grid" connected to the generator inverters 118 which follows the actual grid voltage and so enables the generator inverters 118 to function as if they were connected to the grid itself.

The inverter control unit 170 also connects to and controls the battery charger 144.

The connection of the DC side 130 of the bi-directional inverters 126 to the battery charge controller 144 will herein be referred to as DC bus 174. The battery charge controller 144 either charges or discharges the batteries 148 depending on the voltage of the DC bus 174. In the present embodiment the batteries charge while the DC bus voltage is above 440 V and discharge while the DC bus voltage is below 440 V.

When excess energy is available from the generator, the voltage on the synthetic grid will tend to rise but that rise will be controlled by the bi-directional inverters 126 which will thus sink power through the battery controller 144 to the batteries 148. When demand is raised relative to supply, the voltage on the synthetic grid tends to fall but again that fall is controlled by the bi-directional inverters 126, which can then draw power from the batteries 148 suitably to maintain the voltage of the synthetic grid.

Despite the provision of an energy store in the form of the batteries 148, it is advantageous to be able to export energy to the grid. The capacity of batteries 148 is finite; when the batteries are fully charged energy wastage can be avoided by exporting. The Figure 2 embodiment has three intermediate feed-in devices 150 - one for each of the three phases - connected on their AC output sides via an optional export meter 176 and via the electricity supplier's charging meter 116 to the respective power lines 115 of the three phase grid. The DC inputs of the three intermediate feed-in devices 150 are each connectable via an export relay 178 to the DC bus 164. The export relay 178 is controlled by the electronic controller 168. Export to the grid takes place only when the relay is closed. Note also that during exporting the intermediate feed-in devices 150 pull the voltage on the DC bus 174 down to below 440V, which could be expected to cause discharge of the batteries 148 to the grid. This may not be appropriate, so in the present embodiment when the electronic controller 168 closes the export relay 178, a discharge disable signal is sent to disable battery discharge while export is taking place. While a simple relay signal could be used, in the present embodiment the inverter control unit 172 communicates with the electronic controller 168 through a digital bus, more specifically a controller area network (CAN) bus. The electronic controller 168 communicates with various components of the installation through the CAN bus.

Connection of either or both of: (a) the synthetic grid formed on the AC side 128 of the bi-directional inverters 150 and; b) the grid-connected power lines 115 to on-site loads 182, is controlled, in the illustrated embodiment, by a switching device 162 under the direction of the electronic controller 168. In the present embodiment the switching device 162 takes the form of a soft transfer switch with a switching time below 100ms which is synchronised with the mains grid. A suitable device is sold under the trade mark ASCO Series 7000 by Emerson Electric Co. but other suitable devices will be known to the skilled person. The switching device 162 has a first switch bank 184 which is normally closed to connect the synthetic grid to the loads 182, so that the loads are driven by the on-site generator and/or the batteries 148. When necessary the switching device can open the switches of the first bank 184 and close a second bank of switches 186 to connect the loads 182 via the power lines 140 to the mains power grid.

It should be noted that many components of the installations illustrated and described herein can be purchased "off the shelf". In Figure 2 a dotted box 188 has been placed around those components of the installation which may be offered to purchasers-as a single unit or as a collection of parts - in the form of an energy management device to suitably manage battery charge/discharge, electricity export through the intermediate feed-in device, and the synthetic grid.

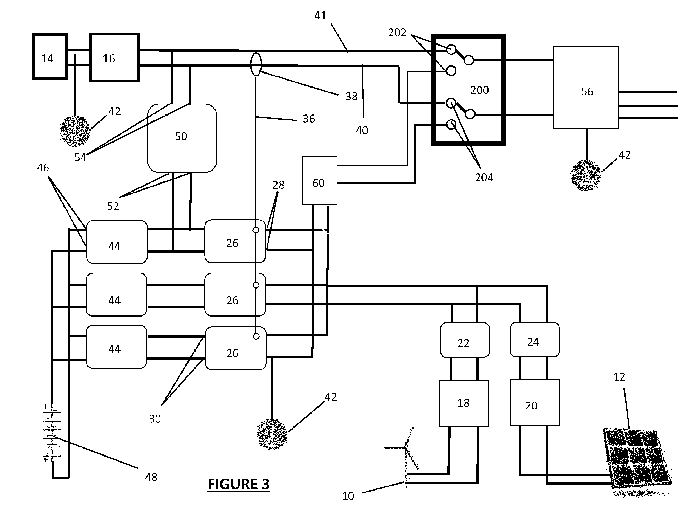

A variant of the system described above in relation to Figure 1 is shown in Figure 3. Identical reference signs have been used to identify identical features for the avoidance of repetition, and the operation of the system of Figure 3 is substantially that same as that of the embodiment described above in relation to Figure 1.

In Figure 3, the system further comprises a soft changeover switch 200, which is connected at its input 202 to the grid-connected power lines 40, 41 and 204 to the renewable power sources 22, 24, via switch fuse 60, as previously described. Loads 56 can thus be powered directly from the grid by diverting power from the grid 202, via the soft changeover switch 200, or 204 by the renewable power sources 22, 24. The soft changeover switch 200 is adapted to fade the power from terminals 202 to 204, or vice versa, thus ensuring a smooth transition from mains power to locally-generated renewables power. Further, because the AC power on the AC side 28 of the bi-directional inverters 26 is synchronised with the grid, there is no interruption to, or disruption of, the mains power supply on the grid. In essence, the loads 56 cannot detect the changeover, thus enabling critical loads to be powered by the invention.

An exemplary application of the invention is in relation to renewable generation with battery storage to operate within G83 Parameters. For example, many of the Scottish Islands are constrained to a G83 grid connection, yet there is a large potential for renewable generation above 16A per phase, per site. Sites with larger demands could reap the benefits of larger renewable energy installations and at the same time relieve pressure on the grid caused by long network runs. In accordance with the invention, a 5 to 15kW system including battery storage could be installed per phase. The battery capacity would be assessed on a site by site basis. A standard G83 inverter would be installed in parallel to the network with the input to this inverter being fed indirectly from the renewables via the battery storage. In relation to export and anti-islanding this would then be within G83 parameters. The invention would thus create a synthetic grid, synchronised with the mains grid, which may allow for continuous running of the wind and solar inverters. In this example, generation from renewable energy sources would initially satisfy site demand and any generation above site demand would be stored in the battery system. When the state of charge of the battery system is within pre-defined limits, the system can export a steady 3.68kW to the grid via the G83 inverter to maintain the capacity to absorb excess generation. If there is less renewable generation than the site demands, the battery system would invert to the synthetic grid to provide battery assistance to the renewable generation to satisfy site demands. If the renewable generation and battery system was unable to satisfy the site demand, the soft transfer switch would operate to bring in the supply from the grid. The transfer switch could be controlled via a microprocessor to only allow operation if both supplies are synchronised and within pre-set tolerances. The transfer switch suitably performs this operation within 10 milliseconds. Anti-islanding is prevented via the transfer switch, by not allowing transfer of supplies if the two supplies are not synchronised, so if the grid had suffered a power loss the transfer would not be initiated. When the site is being supplied via the grid, the synthetic grid produced via the invention, could allow the renewables to keep generating and charge the batteries, and once sufficient charge has been provided, the transfer switch can change back to the synthetic grid. It is envisaged that due to the advantages provided by the invention, any applications that use the invention would no longer be restricted to G83 but could allow a greater capacity for export by allowing connection governed by voltage tolerances etc.

It should be noted that the invention has been describe above in relation to battery storage, i.e. storing excess energy as a chemical potential in a bank of battery cells, but this need not necessarily be the case. For example, alternative energy storage devices could be employed, such as a pumped storage hydroelectricity system, a motor-driven flywheel, a compressed gas energy storage system, a thermal energy storage system, a hydrogen generation and storage plant, and/or a power to gas system. Notably also, any of the above energy storage systems may be connected as a "load" to the system, such as at box 58 of the drawings whereby excess power generation could be used, say to power a power to gas system, such as an electrolytic plant adapted to convert water into hydrogen fuel gas, although this is just an example and the invention is not limited thus.

## Claims

1. An energy management device for use in an electrical installation having an energy store (48), a connection (52, 54) to a mains electrical grid (14), and a generator (10, 12) providing an electrical output which is coupled to a generator inverter (18, 20) which converts the generator's electrical output to AC for driving a load (56, 58), the energy management device being **characterised by**: at least one bi-directional inverter (26) which has an AC side (28) and a DC side (30), the AC side (28) of the bi-directional inverter (26) being connectable to the generator inverter (18, 20) and to the load (56, 58) and the bi-directional inverter (26) being controllable by means of a signal (36, 38) taken from the mains electrical grid (14, 40) to provide on its AC side (28) an AC voltage which varies in sympathy with that of the mains electrical grid (14), and the DC side (30) of the bi-directional inverter (26) being connectable to the energy store (48) to supply electrical energy to it, wherein the bi-directional inverter (26) is able to pass electrical power both (a) in the direction from the AC side (28) to the DC side (30), to charge the energy store (48) and (b) in the direction from the DC side (30) to the AC side (28), to supply energy from the energy store (48) to the load (56, 58).

2. An energy management device as claimed in claim 1 in which the bi-directional inverter (26) passes power from its AC side (28) to its DC side (30) or vice versa as necessary to maintain the AC voltage on its AC side (28) at the same level as the AC voltage of the mains electrical grid (14).

3. An energy management device as claimed in claim 1 or claim 2 further comprising a battery charge controller (44) connected between the bi-directional inverter (26) and an output (46) of the energy management device for connection to an energy store (48) in the form of one or more electrical batteries.

4. An energy management device as claimed in any preceding claim further comprising a port for connection of the DC side (30) of the bi-directional inverter (26) to an input (52) of an intermediate feed-in device (50) for exporting energy to the mains electrical grid (14).

5. An energy management device as claimed in claim 4 when dependent upon claim 3 wherein the battery charge controller (44) is configured to inhibit battery discharge when energy is being exported to the mains electrical grid.

6. An energy management device as claimed in any preceding claim which is for use in a three phase electrical installation and comprises three bi-directional inverters (26), each for supplying a respective phase.

7. An energy management device according to any preceding claim, further comprising a soft changeover switch means (200), which is connected at a first input (202) to the mains electrical grid (14, 40, 41) at a second input (204) to the generator inverter (22, 24), and at its output to a load (56), wherein the soft changeover switch (200) is adapted to fade the connection of power to the load (56) between the input terminals (202, 204).

8. An electrical installation comprising an energy store (48), a connection (54) to a mains electrical grid (14), a generator (10, 12), a generator inverter (18, 20) connected to the generator (10,12) to convert the generator's electrical output to AC for driving a load (56, 58), **characterised by** at least one bi-directional inverter (26) which has an AC side (28) and a DC side (30), the AC side (28) of the bi-directional inverter (26) being connected to the generator inverter (18, 20) and to the load (56, 58) and the bi-directional inverter (26) being controllable by means of a signal (36, 38) taken from the mains electrical grid (14, 40) to provide on its AC side (28) an AC voltage which varies in sympathy with that of the mains electrical grid (14), and the DC side (30) of the bi-directional inverter (26) being connected to the energy store (48) to supply electrical energy to it, wherein the bi-directional inverter (26) is able to pass electrical power both (a) in the direction from the AC side (28) to the DC side (30), to charge the energy store (48) and (b) in the direction from the DC side (30) to the AC side (28), to supply energy from the energy store (48) to the load (56, 58).

9. An electrical installation as claimed in claim 8 further comprising an intermediate feed-in device (50) connectable between the DC side (30) of the bi-directional inverter (26) and the mains electrical grid (14), to export power from the electrical installation to the grid (14).

10. An electrical installation as claimed in claim 9 wherein the intermediate feed-in device (50) limits the power that can be exported from the electrical installation to the grid (14).

11. An electrical installation as claimed in any of claims 8 to 10 in which the electricity generator 10, 12) is powered by a renewable source of energy.

12. An electrical installation as claimed in any of claims 8 to 11 further comprising a switching device (62) switchable between a first configuration in which it connects the load (56, 58) to the AC side (28) of the bi-directional inverter (26) and a second configuration in which it connects the load (56, 58) to the mains electrical grid (14).

13. An electrical installation as claimed in claim 12, wherein the switching device (62) comprises a soft changeover switch means (200), which is connected at a first input (202) to the mains electrical grid (14, 40, 41) at a second input (204) to the generator inverter (18, 20), and at its output to a load (56), wherein the soft changeover switch (200) is adapted to fade the connection of power to the load (56) between the input terminals (202, 204).

14. An electrical installation as claimed in any of claims 8 to 13 wherein the energy store comprises a battery of electrical cells (48) and the installation further comprises a battery charge controller (44) connected between the DC side (30) of the bi-directional inverter (26) and the energy store (48), the battery charge controller (44) being configured to charge the batteries (48) when voltage on the DC side (30) of the bi-directional inverter (26) is above a threshold value and to discharge the batteries (48) when voltage on the DC side (30) of the bi-directional inverter (26) is below a threshold value.

15. An electrical installation as claimed in any of claims 8 to 14 which is three phase and which comprises three bi-directional inverters, each for supplying a respective phase.
